# EUROPÄISCHE PATENTSCHRIFT

(11) **EP 1 861 279 B1**
(45) Veröffentlichungstag und Bekanntmachung des Hinweises auf die Patenterteilung: **23.10.2013**
(21) Anmeldenummer: 06723269.4
(22) Anmeldetag: 07.03.2006
(51) Int. Cl.: B60N 2/48

(54) **LEHNE FÜR EINEN FAHRZEUGSITZ**
BACK REST FOR A VEHICLE SEAT
DOSSIER POUR SIEGE DE VEHICULE

(30) Priorität: 08.03.2005 DE 102005010594
(43) Veröffentlichungstag der Anmeldung: 05.12.2007
(73) Patentinhaber: Brose Fahrzeugteile GmbH & Co. Kommanditgesellschaft, Hallstadt, 96103 Hallstadt (DE)
(72) Erfinder: SZABLEWSKI, Piotr, 42399 Wuppertal (DE)
(74) Vertreter: FDST Patentanwälte
(86) Internationale Anmeldenummer: PCT/EP2006/002080
(87) Internationale Veröffentlichungsnummer: WO 2006/094760

(56) Entgegenhaltungen:
- EP-A- 1 375 246
- DE-A1- 19 731 053
- DE-C1- 19 916 804
- GB-A- 2 383 530
- US-A- 5 684 701
- US-A- 5 822 707
- US-A- 5 848 661

## Beschreibung

Die Erfindung betrifft eine Lehne für einen Fahrzeugsitz nach dem Oberbegriff des Anspruchs 1.

Aus DE 199 16 804 C1 ist eine Kopfstütze für eine Lehne eines Fahrzeugsitzes bekannt, die einen kapazitiven Sensor mit zwei Kondensatorplatten umfaßt, die übereinander angeordnet und Teil eines Kondensators sind, dessen Dielektrikum der Kopf einer auf dem Fahrzeugsitz befindlichen Person bildet. Die Kopfstütze ist dabei aus einer auf der Lehne aufsitzenden unteren Ausgangsposition entsprechend dem Ausgangssignal des Sensors hochfahrbar. Dabei wird davon ausgegangen, daß die Kopfstütze dann richtig auf den Kopf der Person ausgerichtet ist, wenn das von beiden Kondensatorplatten abgegebene Signal gleich ist. Dies trifft aber nur bei einer bestimmten idealen Kopfform zu, die jedoch keineswegs immer anzutreffen ist. So gibt es Leute mit mehr oder weniger ausgeprägten Hinterköpfen bzw. mit mehr oder weniger dicken Hälsen. Davon abhängig ist die Justierung der Kopfstütze mehr oder weniger fehlerhaft. Eine gattungsgemäße Lehne für einen Fahrzeugsitz mit einer Kopfstütze ist aus dem Dokument US-A-5822707 bekannt.

Aufgabe der Erfindung ist es, eine Lehne für einen Fahrzeugsitz nach dem Oberbegriff zu schaffen, die eine verbesserte Einstellung der Kopfstütze ermöglicht.

Diese Aufgabe wird entsprechend den Merkmalen des Anspruchs 1 gelöst.

Hierdurch wird es ermöglicht, daß die Kopfstütze aus ihrer oberen, hochgefahrenen Ausgangsposition soweit herunterfährt, bis der Näherungssensor im oberen Teil der Kopfstütze den Kopf des Benutzers erfaßt, der üblicherweise einen Abstand zur Kopfstütze aufweist, jedoch auch in bestimmten Situationen an der Kopfstütze anliegen kann. Unabhängig von letzterem wird der Kopf durch den Näherungssensor etwa im Bereich des Hinterhauptlochs, und zwar aufgrund der relativ geringen Tastfeldkrümmung dieses Sensors in einem entsprechend kleinen Bereich zuerst erfaßt und das Herunterfahren der Kopfstütze entsprechend gestoppt, so daß letztere höhenmäßig - unabhängig von irgendeiner Kopf- oder Halsform - möglichst optimal in Bezug zum Kopf positioniert wird.

Wenn die Kopfstütze nicht elektromotisch, sondern nur manuell beweglich ist, wird die falsche Positionierung der Kopfstütze durch eine Anzeige angezeigt, so daß die auf dem Fahrzeugsitz sitzende Person selbst die Einstellung vornehmen kann, bis der Näherungssensor anspricht und damit die Anzeige erlischt.

Es ist im übrigen zweckmäßig, wenn die Kopfstütze zum Kopf geneigt angeordnet ist. Dadurch wird bei einem Heckcrash eine Aufwärtsbewegung der Person aufgrund eines Verbiegens des Sitzes nach hinten nicht noch begünstigt, sondern eher behindert.

Wenn die Kopfstütze vorteilhafterweise zusätzlich um eine Horizontalachse gegenüber der Lehne verschwenkbar ist, ist es zweckmäßig, einen weiteren Näherungssensor im mittleren Teil der Kopfstütze anzuordnen, dessen Ausgangssignal zur Neigungsverstellung der Kopfstütze bis zum Erreichen eines optimalen Abstands zwischen Kopf und Kopfstütze verwendbar ist. Hierdurch kann der optimale Abstand des Kopfes von der Kopfstütze eingestellt werden, indem letztere soweit geschwenkt wird, bis ein vorbestimmter optimaler Abstand zwischen Kopfstütze und Kopf eingestellt ist. Außerdem ergibt sich hierdurch eine entsprechende, beim Heckcrash vorteilhaftere Neigung der Kopfstütze zum Kopf.

Weitere Ausgestaltungen der Erfindung sind der nachfolgenden Beschreibung und den Unteransprüchen zu entnehmen.

Die Erfindung wird nachstehend anhand von in den beigefügten schematischen Abbildungen dargestellten Ausführungsbeispielen näher erläutert.
Fig. 1 zeigt schematisch eine Ausführungsform einer Rückenlehne mit Kopfstütze eines Fahrzeugsitzes.
Fig. 2 zeigt ein Sensorfeld eines kapazitiven Näherungssensors im Schnitt.
Fig. 3 zeigt schematisch eine weitere Ausführungsform einer Rückenlehne mit Kopfstütze eines Fahrzeugsitzes.
Fig. 4 zeigt schematisch und ausschnittweise eine zusätzliche Ausführungsform.

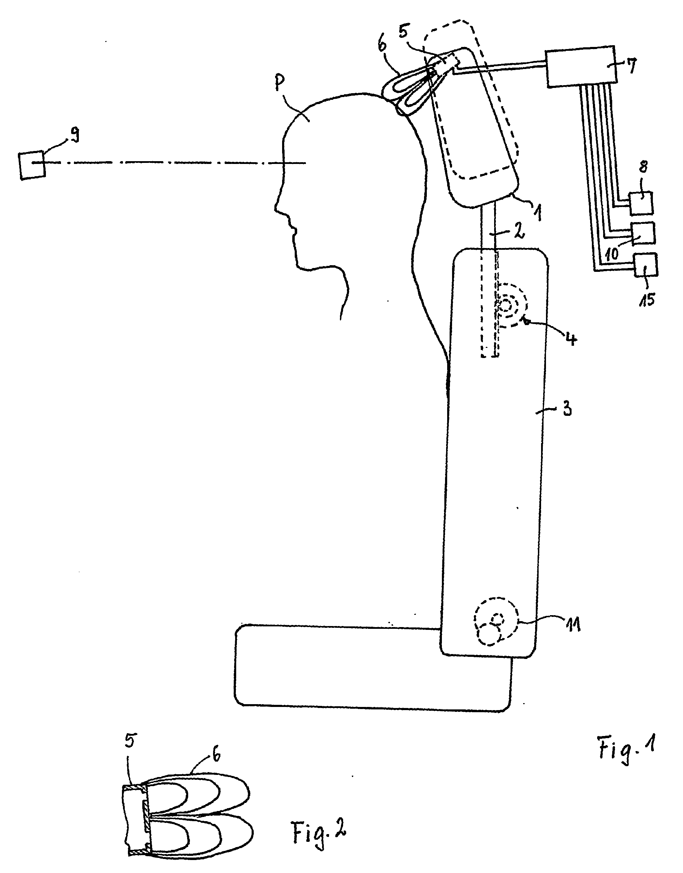

Bei der in Fig. 1 dargestellten Ausführungsform ist eine Kopfstütze 1 über Führungsstangen 2 in einer Rückenlehne 3 eines Fahrzeugsitzes, etwa eines Kraftfahrzeugsitzes, mittels eines elektrischen Antriebs 4 höhenverstellbar geführt. Eine Person P lehnt sich mit ihrem Rücken gegen die Vorderseite der Rückenlehne 3, während sich idealerweise der Kopf der Person P mit seinem zur Kopfstütze 1 nächsten Bereich etwa in der Mitte der Kopfstütze 1 und in einem optimalen Abstand hierzu, d.h. nicht daran anliegend befinden soll. Zweckmäßigerweise ist hierbei die Kopfstütze 1 in Richtung auf den Kopf der auf dem Sitz sitzenden Person P bzw. zur Vorderseite der Rückenlehne 3 geneigt angeordnet.

Im oberen, vorderen, d.h. dem Kopf zugewandten Teil der Kopfstütze 1 ist ein kapazitiver Näherungssensor 5 angeordnet, der ein Sensorfeld 6 aufweist, das schräg abwärts auf den Bereich größter Krümmung des Hinterkopfes (Bereich etwa um das Hinterhauptsloch) der auf dem Sitz sitzenden Person P gerichtet ist. Das Sensorfeld 6 besitzt eine Krümmung, die wesentlich größer als diejenige des Kopfes im zu erfassenden Bereich ist. Der Näherungssensor 5 ist mit einer Steuerung 7, die beispielsweise in der Rückenlehne 3 oder in der Kopfstütze 1 oder auch anderswo untergebracht ist, verbunden, mit der der elektrischen Antrieb 4 entsprechend ansteuerbar ist.

Um die Kopfstütze 1 individuell auf eine Platz nehmende Person einzustellen, ist in der Regel ein Aktivierungsschalter 8 zu betätigen, da bei unverändertem Benutzer keine erneute Einstellung benötigt wird. Die Aktivierung bewirkt ein Verfahren der Kopfstütze 1 in die obere Ausgangstellung (gestrichelt in Fig. 1 dargestellt), wenn sie sich dort nicht bereits befindet. Danach wird die Verstellung der Kopfstütze 1 aus der oberen Ausgangsstellung durch Verfahren nach unten vorgenommen, bis der Näherungssensor 5 auf den Bereich größter Krümmung des Hinterkopfes anspricht, der zuerst vom Näherungssensor 5 erfaßt wird: Die höhenmäßige Verstellung der Kopfstütze 1 wird an dieser Stelle beendet.

Bei einem kapazitiven Näherungssensor ergibt sich üblicherweise, wie in Fig. 2 dargestellt, ein umlaufendes Sensorfeld 6, das im Schnitt etwa keulenförmig ist. Da das Sensorfeld des Näherungssensors 5 (bzw. dessen Keulen) eine Krümmung besitzt, die stark im Verhältnis zur Krümmung des Hinterkopfes einer Person P ist, kann die Kopfposition in ihrer Höhe recht genau erfaßt und die Kopfstütze 1 dementsprechend höhenmäßig eingestellt werden.

Wenn der Näherungssensor 5 während des höhenmäßigen Verfahrens der Kopfstütze 1 nicht schaltet, d.h. keinen Kopf einer Person P erfaßt, befindet sich der Kopf und/oder die Rückenlehne 3 in einer offensichtlich ungünstigen Neigungsstellung. Für den ersteren Fall kann ein von der Person P anzuvisierendes (Anzeige-)Element 9, bei einem Kraftfahrzeug für den Fahrersitz beispielsweise in dessen Rückspiegelbereich, vorgesehen sein, um den Kopf in eine entsprechende Position zu bringen. Für den zweiten Fall kann eine Anzeige vorgesehen sein, die der Person P signalisiert, daß sie die Rückenlehne 3 entsprechend manuell oder über die Betätigung eines Schalters (Tasters) 10 für einen elektromotorischen Antrieb 11 zu verstellen hat, und/oder es kann eine automatische, über die Steuerung 7 steuerbare, motorische Verstellung der Rückenlehne 3 vorgesehen sein, bis der Kopf vom Näherungssensor 5 erfaßbar ist.

Für den Fall, daß die Kopfstütze 1 nicht in ihrer Neigung verstellbar ist, ist es jedenfalls vorteilhaft, wenn sie zur Vorderseite der Rückenlehne 3 und damit zum Kopf hin geneigt angeordnet ist.

Für den Fall, daß die Kopfstütze 1 nur manuell verstellbar ist, läßt sich das Element 9 als Anzeigeelement für eine unzweckmäßige Positionierung der Kopfsstütze 1 verwenden, das dies solange anzeigt, bis der Näherungssensor 5 anspricht und damit die Kopfstütze 1 auf die richtige Höhe eingestellt ist.

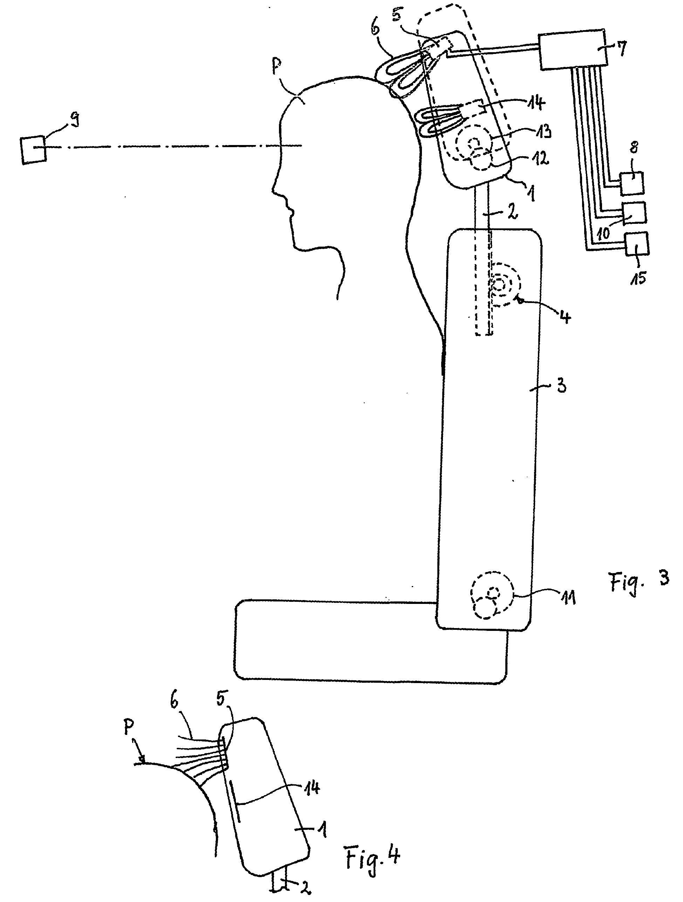

In der Regel ist die Kopfstütze 1 jedoch zusätzlich um eine Horizontalachse 12 in ihrer Neigung in Bezug auf die Rückenlehne 3 mittels eines elektromotorischen Antriebs 13 verstellbar, vgl. Fig. 3 (wobei sich diese Ausführungsform nur insoweit von derjenigen von Fig. 1 unterscheidet). Dann ist es zweckmäßig, wenn, wie in Fig. 3 ebenfalls dargestellt, noch einen zweiten kapazitiven Näherungssensor 14 etwa in der Mitte der Kopfstütze 1 vorzusehen, der dazu dient, den Abstand der Kopfstütze 1 vom Kopf zu überprüfen und auf ein Optimum einzustellen. Dies erfolgt zweckmäßigerweise aus einer am Kopf anliegenden, geneigten Stellung der Kopfstütze 1 heraus, indem die Neigung gegenüber der Rückenlehne 3 derart geändert wird, daß sich ein optimaler Abstand zwischen der Vorderseite der Kopfstütze 1 und dem Kopf einstellt.

Anstelle einer Neigungsverstellung der Kopfstütze 1 kann auch eine translatorische Verstellung hiervon in Richtung vom Kopf weg bzw. auf den Kopf der Person P zu vornehmbar sein.

Während zweckmäßigerweise beim Näherungssensor 5 die steigende Flanke seines Schaltsignals genutzt wird, d.h. die Annäherung an den Kopf bis zum Erreichen eines vorbestimmten Abstandes zum Schalten genutzt wird, wird beim Näherungssensor 14 vorzugsweise die fallende Flanke seines Schaltsignals benutzt, d.h. die Kopfstütze 1 vom Kopf weg bewegt, bis der Näherungssensor 14 diesen nicht mehr innerhalb eines vorbestimmten Abstandsbereichs erfaßt und daher schaltet.

Über die Steuerung 7 kann eine optimale Einstellung der Kopflehne 1 derart erfolgen, daß sowohl die Höhe als auch der Abstand zum Kopf unabhängig von der Stellung der Rückenlehne 3 (allerdings soweit deren Neigung überhaupt eine Einstellung ermöglicht) gegebenenfalls iterativ optimiert werden.

Wie bei der in Fig. 4 dargestellten Ausführungsform kann, anstatt wie bei der vorherigen Ausführungsform kapazitiven Näherungssensoren 5, 14 mit zwei Kondensatorplatten vorzusehen, wenigstens einer hiervon mit nur einer Kondensatorplatte und damit mit einem Streufeld als Sensorfeld verwendet werden.

Gegebenenfalls kann auch ein Memoryschalter 15 etwa in Form eines Tasters vorgesehen sein, der nach einer "Fremdbenutzung" des Sitzes die Rückstellung auf Sitzeinstellung auf eine gespeicherte Position ermöglicht.

Als Näherungssensoren 5, 14 werden insbesondere kapazitive Sensoren bevorzugt, allerdings sind beispielsweise auch induktive Sensoren od.dgl. einsetzbar. Vorzugsweise werden gleiche Näherungssensoren 5, 14 verwendet. Außerdem wird der Näherungssensor 14 im Vergleich zu der dem Kopf zugewandten Fläche der Kopfstütze 1 entsprechend zurückversetzt, um bei einem Aufprall des Kopfes keine Gefährdung hiervon zu bewirken.

Beispielsweise in einem Kraftfahrzeug kann es vorkommen, daß bei längerer Fahrt die Sitzposition geändert wird. Damit dies nicht grundsätzlich zu einer Änderung der Einstellung der Kopfstütze 1 führt, kann es zweckmäßig sein, wenn dadurch bewirkte Änderungen der Signale der Näherungssensoren 5, 14 erst nach Ablauf einer vorbestimmten Zeit zu einer Reaktion durch die Steuerung 7 führen.

Die Rückenlehne 3 kann gegebenenfalls auch horizontal geteilt sein, wobei die beiden Teile, von denen das obere die Kopfsstütze 1 trägt, gegeneinander in der Neigung verstellbar sein können.

## Patentansprüche

1. Lehne für einen Fahrzeugsitz mit einer Kopfstütze (1), die höhenmäßig der Kopfstütze (1) gegenüber der Lehne verstellbar ist, und einem Näherungssensor (5) zum Erkennen der Kopfposition einer auf dem Fahrzeugsitz sitzenden Person relativ zur Kopfstütze (1), wobei eine Anzeige zum Verstellen der Kopfstütze (1) bei Fehlpositionierung und/oder ein Verstellen der Kopfstütze (1) mittels eines elektrischen Antriebs (4) aus einer Ausgangsposition heraus solange erfolgt, bis der Kopf der auf dem Fahrzeugsitz sitzenden Person ein Auslösen des Näherungssensors (5) bewirkt, **dadurch gekennzeichnet, dass** der Näherungssensor (5) ein kapazitiver Sensor mit einem Sensorfeld (6) ist, dessen Krümmung wesentlich größer als diejenige des Kopfes im zu erfassenden Bereich ist, und dass der Näherungssensor (5) im oberen Teil der Kopfstütze (1) angeordnet und abwärts auf den Bereich größter Krümmung des Hinterkopfes der auf dem Fahrzeugsitz sitzenden Person gerichtet ist.

2. Lehne nach Anspruch 1, **dadurch gekennzeichnet, dass** die Kopfstütze (1) aus einer oberen Ausgangsposition heraus abwärts verfahrbar ist.

3. Lehne nach Anspruch 1 oder 2, **dadurch gekennzeichnet, dass** die Kopfstütze (1) mit ihrer Oberkante zum Kopf hin geneigt angeordnet ist.

4. Lehne nach Anspruch 1 oder 2, **dadurch gekennzeichnet, dass** die Kopfstütze (1) bezüglich des Kopfes an der Lehne verstellbar angeordnet ist und im mittleren Bereich der Kopfstütze (1), wo sich der Kopf am nächsten zur Kopfstütze befinden soll, ein weiterer Näherungssensor (14) vorgesehen ist, dessen Ausgangssignal zur Verstellung des Abstandes zwischen Kopf und Kopfstütze (1) bis zum Erreichen eines optimalen Wertes verwendbar ist.

5. Lehne nach Anspruch 4, **dadurch gekennzeichnet, dass** die Kopfstütze (1) in ihrer Neigung zur Lehne elektromotorisch verstellbar ist.

6. Lehne nach Anspruch 4, **dadurch gekennzeichnet, dass** die Kopfstütze (1) translatorisch zur Lehne elektromotorisch verstellbar ist.

7. Lehne nach einem der Ansprüche 4 bis 6, **dadurch gekennzeichnet, dass** bei Nichtansprechen des Näherungssensors (5) im oberen Teil der Kopfstütze (1) der weitere Näherungssensor (14) im mittleren Bereich der Kopfsstütze (1) zum
Einstellen der Höhe der Kopfsstütze (1) verwendbar ist.

8. Lehne nach einem der Ansprüche 1 bis 7, **dadurch gekennzeichnet, dass** bei Nichtansprechen des Näherungssensors (5) im oberen Teil der Kopfstütze (1) und gegebenenfalls des weiteren Näherungssensors (14) im mittleren Bereich der Kopfsstütze (1) eine eine notwendige Verstellung der Lehne anzeigende Anzeige und/oder eine entsprechende elektromotorische Verstellung der Lehne auslösbar ist.

9. Lehne nach einem der Ansprüche 1 bis 8, **dadurch gekennzeichnet, dass** die Einschaltflanke des Näherungssensors (5) zum Beenden der höhenmäßigen Verstellung der Kopfstütze (1) verwendbar ist.

10. Lehne nach einem der Ansprüche 4 bis 9, **dadurch gekennzeichnet, dass** die Ausschaltflanke des weiteren Näherungssensors (14) zum Beenden der Einstellung des Kopfabstandes zur Kopfstütze (1) verwendbar ist.

11. Lehne nach einem der Ansprüche 1 bis 10, **dadurch gekennzeichnet, dass** ein Memoryschalter (15) zum Wiederauffinden einer früheren Kopfstützenstellung vorgesehen ist.

12. Lehne nach einem der Ansprüche 1 bis 11, **dadurch gekennzeichnet, dass** eine erneute Positionsänderung aufgrund einer Sensorsignaländerung nach einem Verstellen erst nach Ablauf einer vorbestimmten Zeit vornehmbar ist.

13. Lehne nach einem der Ansprüche 1 bis 12, **dadurch gekennzeichnet, daß** der Näherungssensor (5) im oberen Teil der Kopfstütze (1) einen Ansprechbereich besitzt, der klein im Verhältnis zur Größe des Kopfes ist.

## Claims

1. Backrest for a vehicle seat with a headrest (1), the height of said headrest (1) being adjustable with respect to the backrest, and a proximity sensor (5) for the detection of the head position of a person sitting in the vehicle seat relative to the headrest (1), wherein a display for the adjustment of the headrest (1) in the case of incorrect positioning and/or an adjustment of the headrest (1) is carried out from an output position by means of an electrical motor (4), until the head of the person sitting in the vehicle seat triggers the proximity sensor (5), **characterised in that**, the proximity sensor (5) is a capacitive sensor with a sensor field (6), the curvature of which is substantially greater than that of the head in the region to be detected, and that the proximity sensor (5) is arranged in the upper part of the headrest (1) and is directed downwards towards the region of greatest curvature of the back of the head of person sitting in the vehicle seat.

2. Backrest according to claim 1,
**characterised in that**,
the headrest (1) is downwardly adjustable from an upper output position.

3. Backrest according to claim 1 or 2,
**characterised in that**,
the headrest (1) is arranged with its upper edge inclined towards the head.

4. Backrest according to claim 1 or 2,
**characterised in that**,
the headrest (1) is arranged on the backrest so that it can be adjusted with respect to the head and a further proximity sensor (14) is provided in the middle region of the headrest (1), where the head should be situated closest to the headrest, the output signal of said further proximity sensor (14) being able to be used for the adjustment of the distance between head and headrest (1) until the optimal value is achieved.

5. Backrest according to claim 4,
**characterised in that**,
the headrest (1) is electromotively adjustable in its inclination to the backrest.

6. Backrest according to claim 4,
**characterised in that**,
the headrest (1) is electromotively adjustable translationally to the backrest.

7. Backrest according to one of claims 4 to 6, **characterised in that**,
in the case of lack of response of the proximity sensor (5) in the upper part of the headrest (1), the further proximity sensor (14) in the middle region of the headrest (1) can be used for the adjustment of the height of the headrest (1).

8. Backrest according to one of claims 1 to 7, **characterised in that**,
in the case of lack of response of the proximity sensor (5) in the upper part of the headrest (1) and, if applicable, of the further proximity sensor (14) in the middle region of the headrest (1), a display indicating a necessary adjustment of the backrest and/or a corresponding electromotive adjustment of the backrest can be triggered.

9. Backrest according to one of claims 1 to 8, **characterised in that**,
the switch-on edge of the proximity sensor (5) can be used for the completion of the height adjustment of the headrest (1).

10. Backrest according to one of claims 4 to 9, **characterised in that**,
the switch-on edge of the further proximity sensor (14) can be used for the completion of the adjustment of the distance of the head from the headrest (1).

11. Backrest according to one of claims 1 to 10, **characterised in that**,
a memory switch (15) is provided to retrieve an earlier headrest position.

12. Backrest according to one of claims 1 to 11, **characterised in that**,
another change of position can only be carried out after a predetermined amount of time due to a sensor signal change after an adjustment.

13. Backrest according to one of claims 1 to 12, **characterised in that**,
the proximity sensor (5) in the upper part of the headrest (1) has a response region, which is small in relation to the size of the head.

## Revendications

1. Dossier pour un siège de véhicule comprenant un appuie-tête (1), qui peut être réglé par rapport au dossier quant à la hauteur de l'appuie-tête (1), et un détecteur de proximité (5) destiné à détecter la position de la tête d'une personne assise sur le siège du véhicule, par rapport à l'appuie-tête (1), dossier dans lequel s'effectue une signalisation pour régler l'appuie-tête (1) en cas de mauvais positionnement, et/ou un réglage de l'appuie-tête (1) au moyen d'un système d'entraînement électrique (4) à partir d'une position initiale, jusqu'à ce que la tête de la personne assise sur le siège du véhicule produise un déclenchement du détecteur de proximité (5),
**caractérisé en ce que** le détecteur de proximité (5) est un détecteur capacitif avec un champ de détecteur (6), dont la courbure est sensiblement plus grande que celle de la tête dans la zone à détecter, et **en ce que** le détecteur de proximité (5) est agencé dans la partie supérieure de l'appuie-tête (1) et est dirigé vers le bas, sur la région de plus grande courbure de l'arrière-tête de la personne assise sur le siège du véhicule.

2. Dossier selon la revendication 1, **caractérisé en ce que** l'appuie-tête (1) peut être déplacé vers le bas, à partir d'une position initiale supérieure.

3. Dossier selon la revendication 1 ou la revendication 2, **caractérisé en ce que** l'appuie-tête (1) est agencé de manière à être incliné en direction de la tête, avec son bord supérieur.

4. Dossier selon la revendication 1 ou la revendication 2, **caractérisé en ce que** l'appuie-tête (1) est agencé sur le dossier de manière réglable par rapport à la tête, et dans la zone centrale de l'appuie-tête (1) où la tête doit se trouver au plus près de l'appuie-tête, il est prévu un autre détecteur de proximité (14) dont le signal de sortie peut être utilisé pour régler la distance entre la tête et l'appuie-tête (1), jusqu'à l'obtention d'une valeur optimale.

5. Dossier selon la revendication 4, **caractérisé en ce que** l'appuie-tête (1) peut être réglé, par moteur électrique, dans son inclinaison par rapport au dossier.

6. Dossier selon la revendication 4, **caractérisé en ce que** l'appuie-tête (1) peut être réglé en translation par rapport au dossier, au moyen d'un moteur électrique.

7. Dossier selon l'une des revendications 4 à 6, **caractérisé en ce que** dans le cas d'une non réponse du détecteur de proximité (5) dans la partie supérieure de l'appuie-tête (1), il est possible d'utiliser ledit autre détecteur de proximité (14) dans la zone centrale de l'appuie-tête (1), pour régler la hauteur de l'appuie-tête (1).

8. Dossier selon l'une des revendications 1 à 7, **caractérisé en ce que** dans le cas d'une non réponse du détecteur de proximité (5) dans la partie supérieure de l'appuie-tête (1), et, le cas échéant, de l'autre détecteur de proximité (14) dans la zone centrale de l'appuie-tête (1), il est possible de déclencher une signalisation indiquant le réglage nécessaire du dossier, et/ou un réglage approprié par moteur électrique du dossier.

9. Dossier selon l'une des revendications 1 à 8, **caractérisé en ce qu'**il est possible d'utiliser le flanc de commutation de mise en marche du détecteur de proximité (5) pour mettre fin au réglage en hauteur de l'appuie-tête (1).

10. Dossier selon l'une des revendications 4 à 9, **caractérisé en ce qu'**il est possible d'utiliser le flanc de commutation d'arrêt dudit autre détecteur de proximité (14) pour mettre fin au réglage de la distance de la tête à l'appuie-tête (1).

11. Dossier selon l'une des revendications 1 à 10, **caractérisé en ce qu'**il est prévu un commutateur à mémoire (15) pour retrouver une position antérieure de l'appuie-tête.

12. Dossier selon l'une des revendications 1 à 11, **caractérisé en ce qu'**une nouvelle modification de position en raison d'une variation de signal de détecteur, après un réglage, ne peut être effectuée qu'après l'écoulement d'un temps prédéterminé.

13. Dossier selon l'une des revendications 1 à 2, **caractérisé en ce que** le détecteur de proximité (5) dans la partie supérieure de l'appuie-tête (1) possède une zone de réponse, qui est petite par rapport à la grandeur de la tête.
